# EUROPEAN PATENT SPECIFICATION

(11) **EP 0 525 382 B1**
(45) Date of publication and mention of the grant of the patent: **10.02.1999**
(21) Application number: 92110588.8
(22) Date of filing: 24.06.1992
(51) Int. Cl.: G06K 15/00, G06K 15/02

(54) **Method and apparatus for scanning a receiving medium**
Verfahren und Vorrichtung für die Abtastung eines Aufzeichnungsträgers
Méthode et appareil de balayage d'un support de réception

(30) Priority: 01.07.1991 US 724061
(43) Date of publication of application: 03.02.1993
(73) Proprietor: EASTMAN KODAK COMPANY, Rochester, New York 14650-2201 (US)
(72) Inventor: Baek, Seung Ho, c/o EASTMAN KODAK COMPANY, Rochester New York 14650 (US); Mackin, Thomas Andrew, c/o EASTMAN KODAK COMPANY, Rochester New York 14650 (US); Firth, Ronald Richard, c/o EASTMAN KODAK COMPANY, Rochester New York 14650 (US); Woo, Nea Yea, c/o EASTMAN KODAK COMPANY, Rochester New York 14650 (US)
(74) Representative: Buff, Michel

(56) References cited:
- US-A- 4 414 583
- US-A- 4 575 730
- SOVIET JOURNAL OF QUANTUM ELECTRONICS vol. 12, no. 2, February 1984, NEW YORK US pages 232 - 235 BAEV ET AL. 'OPTICAL RECORDING OF DATA ON PAPER USING CO2 AND YAG:ND3+ LASERS'

## Description

### BACKGROUND OF THE INVENTION

### CROSS REFERENCE TO RELATED APPLICATIONS

Reference is made to EP-A-0522348, entitled "Method and Apparatus for Scanning a Receiving Medium," filed on even date herewith in the names of S.H. Baek et al., and to EP-A-0522349, entitled "Method and Apparatus for Scanning a Receiving Medium", filed on even date herewith in names of Mackin et al. These applications are assigned to the assignee of the present invention.

### Field of the Invention

The present invention relates to a method and apparatus for scanning a receiving medium, and more particularly, to such a method and apparatus for preventing artifacts in an image produced thereby.

### State of the Prior Art

In one type of scanner apparatus, a photosensitive material is supported on a rotatable drum, and a print head carrying a light source is advanced relative to the photosensitive material by means of a lead screw. The light source is modulated in accordance with an information signal to form an image on the photosensitive material. In order to increase the output of such apparatus, multiple light sources are mounted in the print head so that a plurality of print lines can be formed in a single pass. In multi-line scanning systems, any difference of densities among lines can create very severe artifacts in the image. These artifacts can appear as repetitive patterns known as "banding."

The problem of banding can be particularly troublesome in half-tone printing where, for example, 12 mini-pixels are used to write a half-tone dot. Visible lines in the image, caused by unevenness in the densities of the lines, can come at a different section of each successive half-tone dot, and thus, cycle across the image. The visible lines can be due, for example, to a variation in the intensity of the light sources. The frequency of the visible lines in the image beats with the half-tone dot frequency. The resulting macro density variation can have a spatial frequency in the image which, unfortunately, matches the frequency at which the eye is most sensitive, that is, at about 0.5 cycle/mm. At this frequency range, the typical human eye can see a variation of density of around 0.2%. This small level of uneveness in density is very hard to control in a printer using a multi-line print head.

Additional details relating to the prior art can be found in US-A-4 414 583, which relates to a scanned light beam imaging method and apparatus, whereby, in the use of a scanned light beam for optical imaging, a modulated drive signal is combined with a random noise signal and applied to the light beam modulator. Thus a random motion modulation is applied to the light beam orthogonally to the scanned direction to break up any unscanned or overlapped interstices between adjacent scan lines to make the interstices appear nearly invisible.

### SUMMARY OF THE INVENTION

It is an object of the present invention to overcome the problems in the prior art discussed above and to provide improved method and apparatus for scanning a receiving medium.

In accordance with one aspect of the present invention, there is provided a method for scanning a receiving medium according to claim 1.

In accordance with another aspect of the present invention, there is provided apparatus for scanning a receiving medium, according to claim 6.

The present invention can be used in scanner apparatus in which a diode laser is modulated by a drive current which is controlled in accordance with a digital information signal. Radiation from the diode laser is imaged onto a receiving medium, such as a thermal print medium. In one embodiment of the present invention, a signal provided by a random noise generator is injected into the drive current for the diode laser. In a second embodiment, the digital information signal is modified by randomly changing states of bits in the signal; this results in changing the laser power randomly.

A principal advantage of the present invention is that an image free of artifacts can be produced in both half-tone and continuous tone printing. A further advantage of the present invention is that an image free of artifacts can be produced without the need to precisely balance the output of the lasers used in the printer.

Other features and advantages will become apparent with reference to the following description of the preferred embodiment when read in light of the attached drawings.

### BRIEF DESCRIPTION OF THE DRAWINGS

FIG. 1 is a perspective view of a printer of a type which can utilize the present invention;
FIG. 2 shows a diode laser drive circuit for use in one embodiment of the present invention;
FIG. 3 shows a circuit for use in a second embodiment of the present invention; and
FIG. 4 shows a random noise generator for use in the embodiment shown in FIG. 3.

### DESCRIPTION OF THE PREFERRED EMBODIMENTS

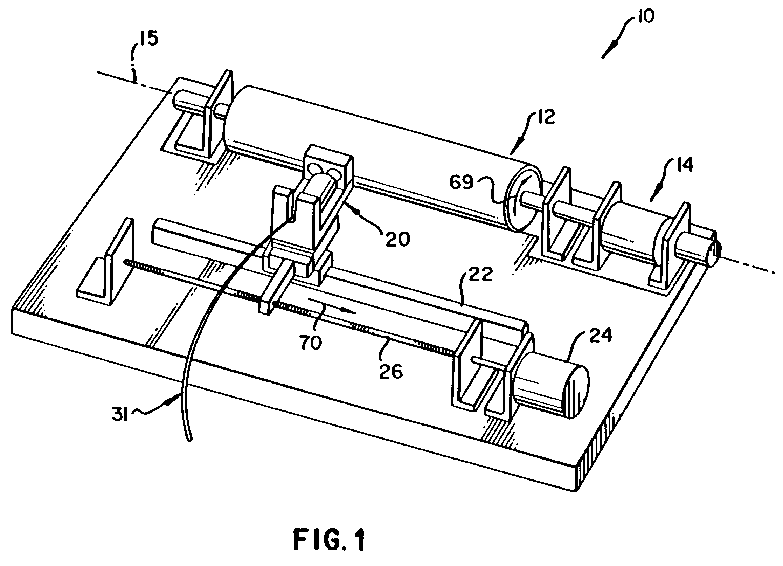

The present invention can be used in scanner apparatus such as thermal printer 10 shown in FIG. 1. Printer 10 comprises a drum 12 which is mounted for rotation about an axis 15 and is driven by a motor 14. Drum 12 is adapted to support a thermal print medium, not shown, of a type in which a dye is transferred by sublimation from a donor to a receiver as a result of heating the dye in the donor. A thermal print medium for use with the printer 10 can be, for example, a medium disclosed in U.S. Pat. No. 4,772,582, entitled "Spacer Bead Layer for Dye-Donor Element Used in Laser Induced Thermal Dye Transfer," granted September 20, 1988. This patent is assigned to the assignee of the present invention.

A scan head 20 is movably supported adjacent drum 12. Scan head 20 is supported for slidable movement on a rail 22, and the scan head 20 is driven by means of a motor 24 which rotates a lead screw 26. Scan head 20 comprises an array of optical fibers 31 which are connected to a plurality of diode lasers (not shown). The diode lasers can be individually modulated in a well known manner to selectively direct light from the optical fibers onto the thermal print medium. A more complete description of the thermal printer described herein can be found in US-A-5 164 742 (WO-A-9108904) in the names of Seung H. Baek et al.

In multi-line printers, any difference in the density of the print lines creates a very severe artifact known as banding. This artifact can be due, for example, to unbalanced laser power, and the artifact is particularly troublesome in half-tone printers. In half-tone printers, it takes, for example, 12 mini-pixels to write a half-tone dot. The printing swath may sometimes be less than 12 mini-pixels, and as a result, a darker line (or several darker lines) comes at a different section of each sequential half-tone dot; these darker lines cycle across the image. The frequency of the lines of uneven density beats with the half-tone dot frequency and is visually observed in the image as banding. The resulting macro density variation can have a spatial frequency in the image which matches with the greatest contrast sensitivity of the eye.

In the present invention, random noise is injected in the laser power in order to overcome the problem of banding described above. Applicants have found that, by varying the power of the lasers randomly, the well-defined beating between the uneven densities of the half-tone dots can be broken up so that the human eye cannot perceive the density variation across the image.

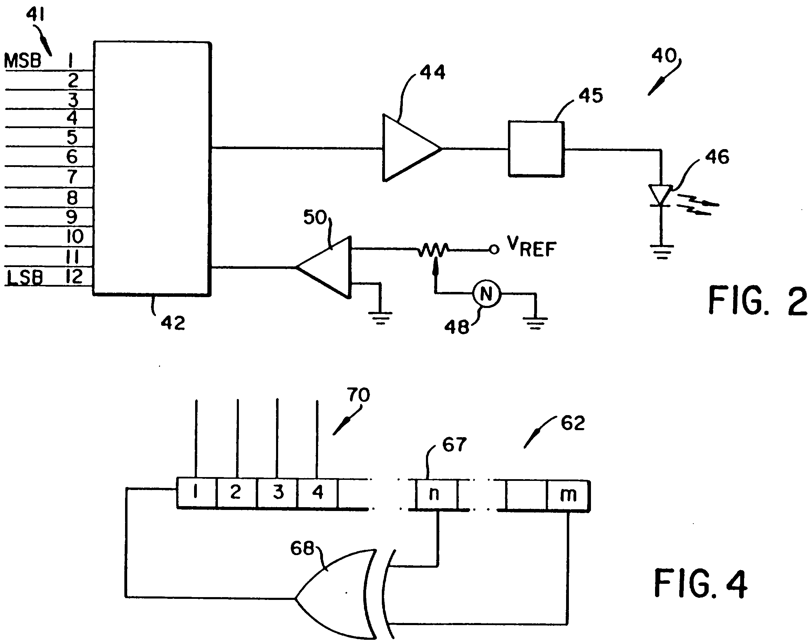

One embodiment of the present invention is shown in FIG. 2. In FIG. 2, there is shown a drive circuit 40 in which random noise is injected directly into the drive current of the diode laser. In circuit 40, a digital information signal 41 is provided to a digital-to-analog converter 42, and the analog output from converter 42 is directed to an amplifier 44. The signal from amplifier 44 is provided to a current driver 45 for diode laser 46. Random noise from a random noise generator 48 is combined with a constant reference voltage V_{REF}, and the combined signal is provided to an amplifier 50. The output from amplifier 50 is connected to the reference voltage port of the converter 42. Thus, by injecting noise onto the constant reference voltage V_{REF}, the output of diode laser 46 is changed sufficiently to overcome the effects of variations in laser power and thereby prevent banding in the image. It would also be possible, in lieu of injecting noise into circuit 40 at the converter 42, to inject the random noise at a point in circuit 40 between the current driver 45 and the amplifier 44.

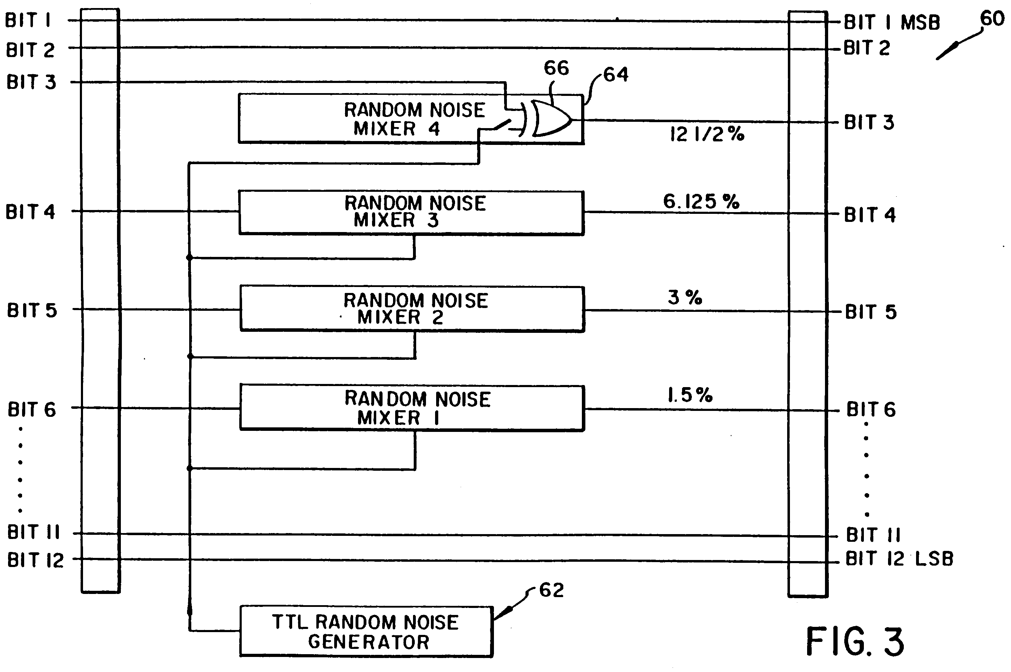

With reference to FIG. 3, there is shown a second embodiment of the present invention in which states of bits in a digital information signal are randomly changed to randomly change the power to a laser. A circuit 60 in FIG. 3 represents the input for a digital-to-analog converter in a diode laser drive circuit of a type shown in FIG. 2. It will be understood, however, that when circuit 60 is used with such a drive circuit, a constant reference voltage would be applied to the digital-to-analog converter instead of the combined signal as shown in FIG. 2. Circuit 60 comprises a random noise generator 62 which is connected to a certain number of the least significant bits through random noise mixers 64. Each of the mixers 64 includes an exclusive OR gate 66 which receives a signal from noise generator 62 and one bit of the information signal. Random noise generator 62 can be a so-called pseudo random noise generator as shown in FIG. 4. As shown in FIG. 4, generator 62 comprises a shift register 67 having storage elements 1 through m, and an exclusive-OR gate 68 which receives inputs from two of the storage elements. The output of gate 68 is provided to the first storage element in register 66. The output taps 70 in generator 62 are connected to, for example, bits 3-6, as shown in FIG. 3. The number of storage elements in register 66 and the location of taps 70 determine the length of the random pattern before it repeats again. This repetition of the pattern will not degrade the effectiveness of the generator 62 as long as the pattern length is much longer than the line length of the image. Since the generator 62 changes values only when the shift register is clocked, it is easy to control the maximum frequency component in the noise spectrum being generated.

## Claims

1. A method for scanning a receiving medium with a scan head (20), said scan head (20) comprising a light source, said method comprising the steps of:
providing a relative movement between said medium and said scan head (20),
providing a modulated drive signal,
injecting a random noise signal into the drive signal to form a modified drive signal; and
providing said modified drive signal to the light source during the scanning of an image on said receiving medium to vary the output intensity of the light source accordingly.

2. A method, as defined in claim 1, wherein said light source is a diode laser.

3. A method of scanning, as defined in claim 2, wherein said random noise signal is injected into said drive signal by injecting said random noise into a power supply which provides power to said laser.

4. A method of scanning, as defined in claim 3, wherein said random noise is provided by an analog noise generator.

5. A method for scanning, as defined in claim 1, wherein said random noise signal is injected into said drive signal by randomly changing states of bits in a digital drive signal.

6. An apparatus (10) for scanning a receiving medium comprising a scan head (20), said scan head (20) comprising a light source (31, 46), said apparatus further comprising:
means (24, 26) for providing a relative movement between said medium and said scan head (20),
means (41) for providing a modulated drive signal,
means (64) for injecting a random noise signal into the drive signal to form a modified drive signal; and
means (44,45) for providing said modified drive signal to the light source (46) during the scanning of an image on said receiving medium to vary the output intensity of the light source accordingly.

7. Apparatus (10), as defined in claim 6, wherein said modulated drive signal is provided to said apparatus in a digital form, and said injecting means (64) includes means (64) for randomly changing states of bits of said modulated drive signal.

8. Apparatus (10), as defined in claim 6, wherein said light source (20) comprises at least one source of laser radiation (31, 46) which is modulated in accordance with said modified drive signal.

9. Apparatus (10), as defined in claim 8, wherein said injecting means (64) includes a random noise generator (62).

## Patentansprüche

1. Verfahren zum Abtasten eines Aufzeichnungsträgers mitttels eines Abtastkopfes (20), der eine Lichtquelle aufweist, gekennzeichnet durch folgende Schritte:
- Erzeugen einer Relativbewegung zwischen Aufzeichnungsträger und Abtastkopf (20),
- Erzeugen eines modulierten Steuersignals,
- Injizieren eines Zufallsrauschsignals in das Steuersignal, um ein modifiziertes Steuersignal zu bilden; und
- Beaufschlagen der Lichtquelle mit dem modifizierten Steuersignal während des Abtastens eines Bildes auf dem Aufzeichnungsträger, um die Ausgangsintensität der Lichtquelle entsprechend zu variieren.

2. Verfahren nach Anspruch 1, dadurch gekennzeichnet, daß die Lichtquelle ein Diodenlaser ist.

3. Verfahren zum Abtasten nach Anspruch 2, dadurch gekennzeichnet, daß das Zufallsrauschsignals in das Steuersignal injiziert wird, indem das Störsignal in eine Spannungsquelle injiziert wird, die dem Laser Energie zuführt.

4. Verfahren zum Abtasten nach Anspruch 3, dadurch gekennzeichnet, daß das Zufallsrauschsignals durch einen analogen Rauschgenerator erzeugt wird.

5. Verfahren zum Abtasten nach Anspruch 1, dadurch gekennzeichnet, daß das Zufallsrauschsignals dadurch in das Steuersignal injiziert wird, indem die Bit-Zustände in einem digitalen Steuersignal zufällig verändert werden.

6. Vorrichtung (10) zum Abtasten eines Aufzeichnungsträgers mittels eines Abtastkopfes (20), der eine Lichtquelle (31, 46) aufweist, gekennzeichnet durch folgende Komponenten:
- Mittel (24, 26) zum Erzeugen einer Relativbewegung zwischen Aufzeichnungsträger und Abtastkopf (20),
- eine Einrichtung (41) zum Erzeugen eines modulierten Steuersignals,
- eine Einrichtung (64) zum Injizieren eines Zufallsrauschsignals in das Steuersignal, um ein modifiziertes Steuersignal zu bilden; und
- Mittel (44, 45) zum Beaufschlagen der Lichtquelle (46) mit dem modifizierten Steuersignal während des Abtastens eines Bildes auf dem Aufzeichnungsträger, um die Ausgangsintensität der Lichtquelle entsprechend zu variieren.

7. Vorrichtung (10) nach Anspruch 6, dadurch gekennzeichnet, daß das modulierte Steuersignal der Vorrichtung in digitaler Form zugeführt wird, und daß die Injiziereinrichtung (64) ein Mittel (64) zum zufälligen Verändern der Bit-Zustände des modulierten Steuersignals aufweist.

8. Vorrichtung (10) nach Anspruch 6, dadurch gekennezeichnet, daß die Lichtquelle mindestens eine Laserstrahlungsquelle (31, 46) aufweist, die gemäß dem modifizierten Steuersignal modulierbar ist.

9. Vorrichtung (10) nach Anspruch 8, dadurch gekennzeichnet, daß die Injizierenrichtung (64) einen Zufallsgenerator (62) aufweist.

## Revendications

1. Procédé de balayage d'un support de réception à l'aide d'une tête de balayage (20), ladite tête de balayage (20) comprenant une source de lumière, ledit procédé comprenant les étapes consistant à :
engendrer un mouvement relatif entre ledit support et ladite tête de balayage (20),
engendrer un signal d'attaque modulé,
injecter un signal de bruit aléatoire dans le signal d'attaque afin d'élaborer un signal d'attaque modifié, et
appliquer ledit signal d'attaque modifié à la source de lumière pendant le balayage d'une image sur ledit support de réception afin de faire varier l'intensité de sortie de la source de lumière en conséquence.

2. Procédé selon la revendication 1, dans lequel ladite source de lumière est un laser à diode.

3. Procédé de balayage selon la revendication 2, dans lequel ledit bruit aléatoire est injecté dans ledit signal d'attaque en injectant ledit bruit aléatoire dans une alimentation qui fournit du courant audit laser.

4. Procédé de balayage selon la revendication 3, dans lequel ledit bruit aléatoire est engendré par un générateur de bruit analogique.

5. Procédé de balayage selon la revendication 1, dans lequel ledit signal de bruit aléatoire est injecté dans ledit signal d'attaque en modifiant de façon aléatoire les états de bits dans un signal d'attaque numérique.

6. Dispositif (10) de balayage d'un support de réception, comprenant une tête de balayage (20), ladite tête de balayage (20) comprenant une source de lumière (31, 46), ledit dispositif comprenant en outre :
un moyen (24, 26) destiné à assurer un mouvement relatif entre ledit support et ladite tête de balayage (20),
un moyen (41) destiné à engendrer un signal d'attaque modulé,
un moyen (64) destiné à injecter un signal de bruit aléatoire dans le signal d'attaque afin d'élaborer un signal d'attaque modifié, et
un moyen (44, 45) destiné à appliquer ledit signal d'attaque modifié à la source de lumière (46) pendant le balayage d'une image sur ledit support de réception afin de faire varier l'intensité de sortie de la source de lumière en conséquence.

7. Dispositif (10) selon la revendication 6, dans lequel ledit signal d'attaque modulé est appliqué audit dispositif sous forme numérique, et ledit moyen d'injection (64) comprend un moyen (64) destiné à modifier de façon aléatoire les états de bits dudit signal d'attaque modulé.

8. Dispositif (10) selon la revendication 6, dans lequel ladite source de lumière (20) comprend au moins une source de rayonnement laser (31, 46) qui est modulé conformément audit signal d'attaque modifié.

9. Dispositif (10) selon la revendication 8, dans lequel ledit moyen d'injection (64) comprend un générateur de bruit aléatoire (62).
